# EUROPÄISCHE PATENTSCHRIFT

(11) **EP 3 530 154 B1**
(45) Veröffentlichungstag und Bekanntmachung des Hinweises auf die Patenterteilung: **11.11.2020**
(21) Anmeldenummer: 19152701.9
(22) Anmeldetag: 21.01.2019
(51) Int. Cl.: A47J 31/44

(54) **EINBAUGERÄT ZUR HERSTELLUNG VON AUFGUSSGETRÄNKEN**
BUILT-IN DEVICE FOR PREPARATION OF INFUSION DRINKS
APPAREIL À ENCASTRER DESTINÉ À LA PRÉPARATION DE BOISSONS INFUSÉES

(30) Priorität: 26.02.2018 DE 102018104272
(43) Veröffentlichungstag der Anmeldung: 28.08.2019
(73) Patentinhaber: Miele & Cie. KG, 33332 Gütersloh (DE); Eugster/Frismag AG, 8580 Amriswil (CH)
(72) Erfinder: Kretschmer, Sascha, 33334 Gütersloh (DE); Pötter, Berthold, 33332 Gütersloh (DE); Wüstefeld, Michael, 59555 Lippstadt (DE); Sonderegger, Lukas, 9435 Heerb Heerbrugg (CH)

(56) Entgegenhaltungen:
- EP-A1- 2 677 906
- DE-A1-102005 048 164
- Weert Franzen: "Neff Kaffeevollautomat c77v60 / Reinigung", Youtube, 21. Dezember 2014 (2014-12-21), XP054979302, Gefunden im Internet: URL:https://www.youtube.com/watch?v=8SeEoG RLzkA [gefunden am 2019-04-12]
- Maniek gisz: "Siemens CT 636 les1", , 16. April 2016 (2016-04-16), Seiten 1-2, XP054979307, Gefunden im Internet: URL:https://www.youtube.com/watch?v=rZCkxX YJ5tg [gefunden am 2016-04-16]

## Beschreibung

Die Erfindung betrifft ein Einbaugerät zur Herstellung von Aufgussgetränken nach dem Oberbegriff des Patentanspruches 1.

Ein derartiges Einbaugerät umfasst neben zahlreichen Bauelementen insbesondere auch eine Heizeinrichtung zur Erhitzung von Wasser und/oder zur Herstellung von Wasserdampf, sodass das erhitzte Wasser zum Beispiel in einer ebenfalls vorhandenen Brüheinheit zur Aufbereitung des Aufgussgetränkes genutzt werden kann. Der gleichermaßen mit der Heizeinrichtung herstellbare Wasserdampf kommt in der Regel zum Einsatz, um Getränke oder Milch aufzuschäumen. Ein derartiges Einbaugerät weist einen zumeist als muldenartige Vertiefung ausgeführten Abstellbereich als Bestandteil einer den Innenraum des Einbaugerätes verschließenden Tür auf. Den unteren Teil des Abstellbereiches bildet dabei eine Abstellfläche, auf der ein Trinkgefäß abgestellt werden kann, das mit einem in dem Einbaugerät hergestellten Aufgussgetränk befüllt wird. Die Abstellfläche verfügt darüber hinaus über mehrere Ablauföffnungen, durch die verspritzte oder übergelaufene Flüssigkeitsreste in eine unterhalb der Abstellfläche angeordnete Abtropfschale abgeführt werden. Darüber hinaus ist in dem Abstellbereich eine Ausgabevorrichtung angeordnet, an deren Unterseite ein Getränkeauslass vorhanden ist. Es können natürlich auch mehrere Getränkeauslässe zur Abgabe der hergestellten Aufgussgetränke oder von Getränkezugaben, wie Milch, oder von Mischgetränken in das bereits erwähnte Trinkgefäß vorhanden sein. Ferner kann eine Dampfdüse dazu genutzt werden, Milchschaum zu erzeugen oder heißen Wasserdampf abzugeben.

Einbaugeräte der hier betroffenen Art weisen zudem die Besonderheit auf, dass sie in einen Küchenschrank oder in ein vergleichbares Möbelstück integriert sind und folglich nur ihre Frontseite sichtbar ist. Diese Frontseite wird als die eingangs bereits erwähnte und den Innenraum des Einbaugerätes verschließende Tür ausgeführt, die damit die Möglichkeit schafft, beispielsweise Reinigungs-, Reparatur- oder Wartungsarbeiten durchführen zu können beziehungsweise für den Betrieb des Einbaugerätes erforderliche Mittel, wie Kaffee, Tee oder Reinigungsmittel aufzufüllen. Insbesondere zu Reinigungszwecken ist es häufig erforderlich, einzelne Elemente aus dem Innenraum entnehmen zu können. Dies trifft beispielsweise auch auf die Brüheinheit zu. Aus dem genannten Grund ist die Brüheinheit bisher unmittelbar zugänglich, wenn die Tür des Einbaugerätes geöffnet ist. Gattungsgemäße Geräte aus dem Stand der Technik sind beispielsweise in XP054979302 und DE102005048164 A1 offenbart.

Der Bezug des für die Herstellung von Aufgussgetränken erforderlichen Wassers kann aus einem Wassertank erfolgen, der ebenfalls hinter der verschließbaren Tür angeordnet ist. Es sind jedoch auch Ausführungen bekannt, die unmittelbar mit einem Wasseranschluss gekoppelt sind, sodass hierüber das benötigte Trinkwasser zur Verfügung gestellt wird oder der Wassertank automatisch befüllt wird, wenn er einen definierten Füllstand unterschritten hat. Ein häufig anzutreffendes Problem derartiger Einbaugeräte besteht darin, dass die Tür ein erhebliches Eigengewicht aufweist und daher sehr stabile Scharniere erfordert. Dies rührt daher, dass beispielsweise die Ausgabevorrichtung bislang in die Tür integriert ist, was darüber hinaus lösbare und miteinander koppelbare Anschlussleitungen erfordert, die naturgemäß im Laufe der Zeit zunehmend Probleme hinsichtlich der Abdichtung mit sich bringen. Der hierfür erforderliche konstruktive Aufwand ist erheblich und führt damit zu einem erhöhten Herstellungs- und Montageaufwand, sodass ein derartiges Einbaugerät insgesamt eine kostenintensive Fertigung erfordert.

Der Erfindung stellt sich somit das Problem, ein Einbaugerät zur Herstellung von Aufgussgetränken bereitzustellen, dessen Aufbau insgesamt vereinfacht und kompakt ausgeführt ist und bei dem die im Innenraum angeordneten Bestandteile mit möglichst geringem Aufwand entfernt und anschließend wieder eingesetzt werden können.

Erfindungsgemäß wird dieses unter anderem dieses Problem durch ein Einbaugerät zur Herstellung eines Aufgussgetränkes mit den Merkmalen des Patentanspruchs 1 gelöst. Vorteilhafte Ausgestaltungen und Weiterbildungen der Erfindung ergeben sich aus den nachfolgenden Unteransprüchen.

Ein Einbaugerät zur Herstellung von Aufgussgetränken, das eine Heizeinrichtung zur Erhitzung von Wasser und/oder zur Herstellung von Wasserdampf, eine Brüheinheit zur Aufbereitung des Aufgussgetränkes mittels des erhitzten Wassers, eine Ausgabevorrichtung mit mindestens einem Getränkeauslass zur Abgabe des in dem Einbaugerät mittels der Brüheinheit hergestellten Aufgussgetränkes und eine das Einbaugerät verschließende Tür umfasst, wurde erfindungsgemäß dahingehend weitergebildet, dass hinter der geöffneten Tür des Einbaugerätes, ein Aufnahmeraum mit mindestens einer zum Einsetzen und zur Entnahme der Brüheinheit ausgeführten Führungsbahn vorhanden ist.

Mit der Erfindung gelingt es erstmals, das Einbaugerät insgesamt wesentlich einfacher und im Aufbau kompakter zu gestalten, indem in der Tür keine Ausgabevorrichtung mehr vorhanden ist. Die Ausgabevorrichtung wird nunmehr in den Innenraum des Einbaugerätes integriert, was dazu führt, dass die Tür ein geringeres Gewicht aufweist. Die zum Öffnen und Schließen der Tür erforderlichen Scharniere können damit ebenfalls weniger kompakt ausgeführt sein. Aus diesem, im Vergleich zu bekannten Lösungen vollständig geänderten Konzept ergibt sich allerdings, dass die Brüheinheit nunmehr in einem Bereich hinter der Ausgabevorrichtung angeordnet werden muss, da seitlich neben der Ausgabevorrichtung ein Wassertank vorhanden ist. Aus dem genannten Grund geht die Erfindung dahin, den Aufnahmeraum zum Einsetzen des Wassertanks mit einer Doppelfunktion auszustatten. Einerseits weist er die ihm bisher zugewiesene Funktion der Aufnahme des Wassertanks auf und andererseits dient er dazu, die Brüheinheit über eine Führungsbahn geführt in ihrer Endposition zu verbringen. Hierfür wird bevorzugt, jedoch nicht zwingend, bodenseitig des Aufnahmeraumes eine Führungsbahn angeordnet, die die Brüheinheit zunächst in Richtung der Rückwand des Aufnahmeraumes führt, um sie anschließend umzulenken und seitlich in ihre Endlage zu verbringen. Dabei ist die Führungsbahn im Sinne einer Zwangsführung zu verstehen, was bedeutet, dass durch die Führung der Brüheinheit entlang der Führungsbahn eine fehlerhafte Montage der Brüheinheit zuverlässig ausgeschlossen werden kann.

Dabei entspricht es einer ersten Ausgestaltung der Erfindung, dass die Führungsbahn als von der Tür in den Aufnahmeraum hinein ansteigende Rampe ausgeführt ist. Da der Aufnahmeraum gleichzeitig dem Einsetzen des Wassertanks dient, ist es nachvollziehbar, dass der Wassertank an seiner bodenseitigen Unterseite korrespondierend zu der Rampe Ausnehmungen aufweist. Die Montagereihenfolge ist dabei derart vorgesehen, dass bei entnommenem Wassertank zunächst die Brüheinheit in den Aufnahmeraum eingeführt und anschließend der Wassertank in den Aufnahmeraum eingesetzt wird. Bevorzugt werden Sensoren verwendet, die ein geeignetes Signal erzeugen, wenn versehentlich der Wassertank ohne die zuvor eingesetzte Brüheinheit in den Aufnahmeraum eingebracht wird.

Wie zuvor bereits ausgeführt wurde, wird die Brüheinheit zunächst entlang der Führung in den Aufnahmeraum eingeführt und anschließend seitlich bewegt und hinter der Ausgabevorrichtung in ihrer Endlage positioniert. Dies hat zur Folge, dass der Aufnahmeraum eine C- oder L-Form aufweist. Die Führungsbahn wird erfindungsgemäß derart ausgeführt, dass die Brüheinheit nicht fehlerhaft montiert werden kann. Setzt der Anwender die Brüheinheit beispielsweise fehlerhaft also in einer falschen Einbaulage in den Aufnahmeraum ein, so lässt sich diese nicht entlang der Führungsbahn bewegen, was zur Folge hat, dass die Brüheinheit zunächst in ihre korrekte Position verbracht werden muss. Damit vermittelt die Führungsbahn dem Nutzer des Einbaugerätes eine spürbare, also haptisch wahrnehmbare Montagehilfe. Eine derartige Ausführung eines Einbaugerätes ist damit sogar für sehbehinderte Personen problemlos nutzbar.

Eine sehr vorteilhafte, weiterbildende Maßnahme für die Erleichterung des Einsetzens der Brüheinheit in den Aufnahmeraum besteht ferner darin, dass die Führungsbahn an der Rückwand des Aufnahmeraumes einen haptisch wahrnehmbaren Anschlag zur Markierung eines Richtungswechsels aufweist. Auch diese Lösung trägt dazu bei, die Montage insgesamt wesentlich zu vereinfachen und dem Anwender eine Hilfestellung zu geben, wie die Brüheinheit korrekt montiert werden muss.

Nachdem der erste, haptisch wahrnehmbare Anschlag im Bereich der Rückwand des Aufnahmeraumes erreicht wurde, wird die Brüheinheit über einen Richtungswechsel seitlich weitergeführt und dadurch hinter die Ausgabevorrichtung verbracht, wo sie ihre Endposition erreicht. Hierfür weist die Führungsbahn gemäß einer speziellen Ausgestaltung der Erfindung einen ebenfalls haptisch wahrnehmbaren Endanschlag als Markierung der erreichten Endlage der Einbauposition der Brüheinheit auf.

Es ist vorstellbar, dass der Aufnahmeraum innerhalb des Einbaugerätes durch seine verwinkelte Gestalt Bereiche aufweist, die relativ schwer einsehbar sind. Grundsätzlich stellt dies kein Problem dar, da während des Einsetzens der Brüheinheit ein Anschlag beziehungsweise ein Endanschlag die korrekte Montage anzeigen. Dennoch ist es beispielsweise für Reinigungszwecke von Vorteil, wenn eine optimale Sicht innerhalb des Aufnahmeraumes möglich ist. Hierfür wird vorgeschlagen, dass der Aufnahmeraum eine Beleuchtung aufweist.

Im Zuge von Energiesparmaßnahmen ist es dabei vorteilhaft, wenn die Beleuchtung aus mindestens einer LED-Lampe besteht. Zudem bringen derartige Beleuchtungen ein sehr helles Licht mit sich, sodass mit geringem Aufwand eine optimale Ausleuchtung des Aufnahmeraumes erreicht werden kann.

Wie eingangs bereits ausgeführt wurde, weist der Aufnahmeraum eine Doppelfunktion auf, indem er die Brüheinheit und zusätzlich den für die Zubereitung von Aufgussgetränken mit Wasser befüllten Wassertank aufnimmt. Beide Elemente sind lösbar in den Aufnahmeraum eingesetzt und können folglich entnommen werden, wenn dies erforderlich ist.

Die Führungsbahn wird bevorzugt rampenartig ausgeführt, sodass sie eine ansteigende Kontur aufweist. Diese Geometrie wird beim Wassertank als komplementäre Ausnehmung gestaltet, um den Wassertank bis an die Rückwand des Aufnahmeraumes in den Aufnahmeraum einsetzen und damit den vorhandenen Platz optimal ausnutzen zu können, was sich letztlich auch positiv auf das zur Verfügung stehende Wasservolumen auswirkt. Mittig weist die Führungsbahn zudem eine Ausnehmung auf, in die der Wassertank passgenau eingreift. In diesem Bereich befindet sich ein bei eingesetztem Wassertank mit diesem gekoppeltes Wassertankventil. Diese spezielle Art der Anordnung führt dazu, dass der Wassertank in den Aufnahmeraum eingesetzt wird und keine zusätzlichen Montagearbeiten erforderlich werden, um ihn mit dem Strömungsleitungssystem des Einbaugerätes zu koppeln. Nach dem Einsetzen des Wassertanks in den Aufnahmeraum kann folglich unmittelbar Wasser aus dem Wassertank entnommen werden, um damit ein Aufgussgetränk zuzubereiten.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise eine Frontansicht eines Einbaugerätes zur Herstellung eines Aufgussgetränkes
- Figur 2:: ausschnittsweise einen Blick in den Aufnahmeraum eines Einbaugerätes in einer ersten Perspektive
Und
- Figur 3:: ausschnittsweise einen Blick in den Aufnahmeraum eines Einbaugerätes in einer zur Figur 2 abweichenden Perspektive.

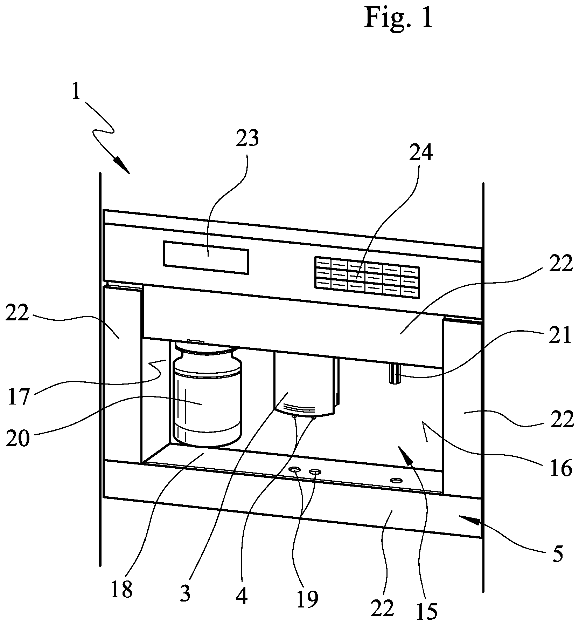

Bei dem in Figur 1 gezeigten Einbaugerät 1 handelt es sich um einen Getränkebereiter zur Herstellung von Aufgussgetränken, also beispielsweise zur Zubereitung von Tee oder Kaffee. Die Besonderheit derartiger Einbaugeräte besteht darin, dass sie in einen Küchenschrank integriert werden und somit platzsparend untergebracht sind. Ein derartiges Einbaugerät 1 weist einen als muldenartige Vertiefung ausgeführten Abstellbereich 15 auf, der von mehreren Wänden begrenzt ist, von denen in der Figur 1 lediglich die Rückwand 16 und eine Seitenwand 17 erkennbar sind. Den unteren Teil des Abstellbereiches 15 bildet eine Abstellfläche 18, auf der ein Trinkgefäß abgestellt werden kann, das mit einem in dem Einbaugerät 1 hergestellten Aufgussgetränk befüllt wird. Die Abstellfläche 18 weist darüber hinaus mehrere Ablauföffnungen 19 auf, über die verspritzte oder übergelaufene Flüssigkeitsreste in eine unterhalb der Abstellfläche 18 angeordnete Abtropfschale 25 abgeführt werden können. In den Abstellbereich 15 ist bei dem Beispiel in Figur 1 darüber hinaus ein Milchgefäß 20 integriert, welches hier in eine Aufnahme lösbar eingehängt und somit ohne Berührungskontakt zu der Abstellfläche 18 in dem Abstellbereich 15 aufgenommen ist. Es sind jedoch auch Varianten möglich, bei denen das Milchgefäß 20 auf der Abstellfläche 18 abgestellt wird. Darüber hinaus mündet in den Abstellbereich 15 eine Ausgabevorrichtung 3, an deren Unterseite mehrere Getränkeauslässe 4 vorhanden sind, die der Abgabe der hergestellten Aufgussgetränke oder von Getränkezugaben, wie Milch oder von Mischgetränken dienen. Seitlich neben der Ausgabevorrichtung 3 ist ferner eine Dampfdüse 21 vorhanden, die zur Erzeugung von Milchschaum nutzbar ist oder der Abgabe von heißen Wasserdampf dient.

Ein derartiges Einbaugerät 1 weist mehrere, als Blenden 22 ausgeführte Verkleidungsteile auf, die hauptsächlich ästhetischen Gesichtspunkten entsprechen. Um den Innenraum eines derartigen Einbaugerätes 1 zugänglich zu machen, ist die gesamte Frontseite als eine Tür 5 ausgeführt, die geöffnet und verschlossen werden kann. Den oberen Abschluss dieser Tür 5 bildet ein Ein- und Ausgabebereich, der bei dem in Figur 1 dargestellten Beispiel eine Anzeige 23 in Form eines Displays und eine Tastatur 24 zur Programmierung beziehungsweise Eingabe von Daten aufweist.

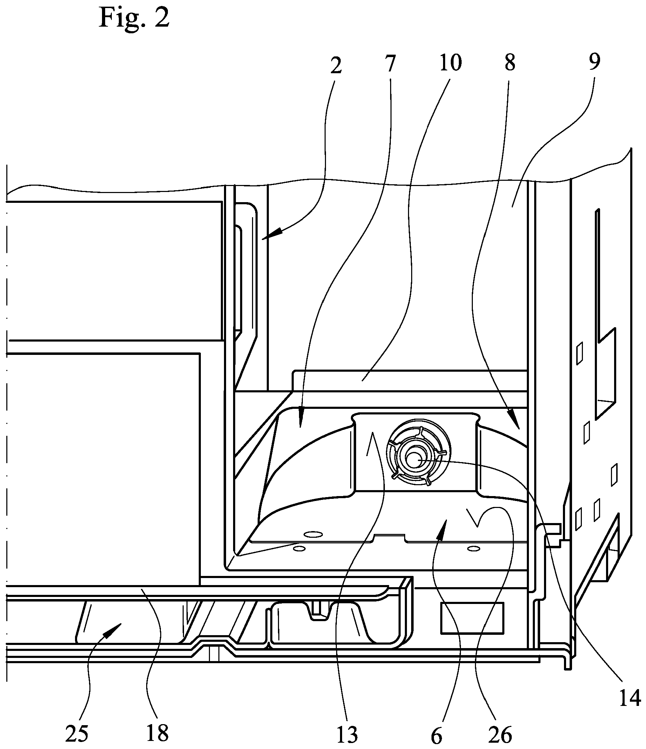

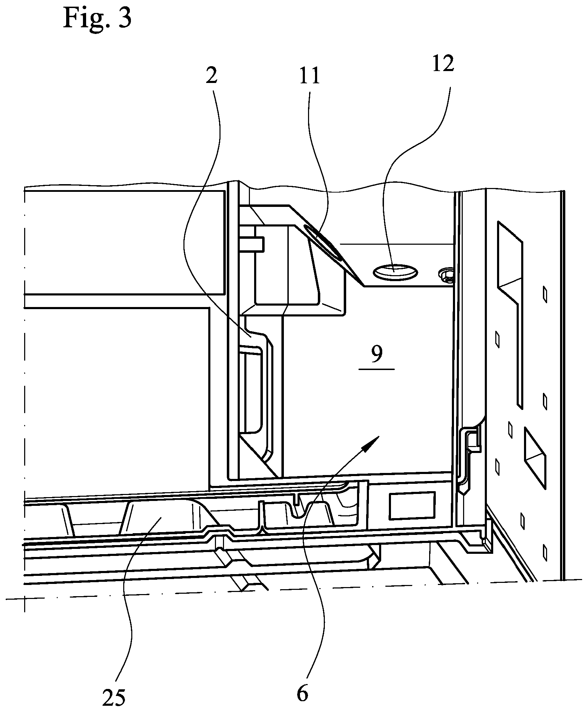

Die Figur 2 erlaubt ausschnittsweise einen Blick in den Aufnahmeraum 6 des Einbaugerätes 1, das im vorliegenden Beispiel ohne eine das Einbaugerät 1 verschließende Tür 5 dargestellt ist. Der Blick in den Aufnahmeraum 6 ist in dieser Form nur möglich, wenn zuvor der Wassertank aus dem Aufnahmeraum 6 entnommen wurde. Nur in diesem Fall kann die Brüheinheit 2 entnommen oder eingesetzt werden. Vom Boden 26 des Aufnahmeraumes 6 ausgehend erhebt sich beidseitig und rampenartig ansteigend je eine Führungsbahn 7, 8 bis in ein Höhenniveau, dass der Einbauposition der Brüheinheit 2 entspricht. Die der Einschubrichtung entgegengesetzten Flanken der Führungsbahnen 7, 8 sind bei diesem Beispiel kreisbogenförmig ausgeführt und schließen mittig eine Ausnehmung 13 ein, in der sich ein Wassertankventil 14 befindet, über das der Anschluss des nicht gezeigten Wassertanks an das Strömungsleitungssystem des Einbaugerätes 1 zur Herstellung eines Aufgussgetränkes erfolgt. Die Führungsbahnen 7, 8 verlaufen bis zur Rückwand 9 des Aufnahmeraumes 6, wo darüber hinaus ein Anschlag 10 vorhanden ist, der beim Einsetzen der Brüheinheit 2 in den Aufnahmeraum 6 einen spürbaren, also habtil wahrnehmbaren Anschlag bildet, der dem Anwender zeigt das nunmehr eine Richtungsumkehr erforderlich ist, sodass die Brüheinheit 2 anschließend hinter die Ausgabevorrichtung 3 geschwenkt werden muss, wo sie ihre Endposition erreicht, die ebenfalls durch einen Endanschlag habtil wahrnehmbar ausgeführt ist. In der Figur 2 ist zudem die Abtropfschale 25 in geschnittener Darstellung erkennbar, die sich unterhalb der ebenfalls in geschnittener Darstellung gezeigten Abstellfläche 18 befindet. Schließlich zeigt die Darstellung in Figur 3 einen Blick in den Aufnahmeraum 6 aus einer anderen Perspektive, genauer gesagt in einer Blickrichtung von schräg unten auf das Einbaugerät 1. Daraus wird ersichtlich, dass der Aufnahmeraum 6 im vorliegenden Beispiel zwei Beleuchtungen 11 und 12 in Form von LED-Lampen aufweist, die der Beleuchtung des Aufnahmeraumes 6 dienen. Auf der linken Seite des Aufnahmeraumes 6 ist zudem die in ihrer Endposition hinter der Ausgabevorrichtung 3 angeordnete Brüheinheit 2 erkennbar.

### BEZUGSZEICHENLISTE:

- 1: Einbaugerät
- 2: Brüheinheit
- 3: Ausgabevorrichtung
- 4: Getränkeauslass
- 5: Tür
- 6: Aufnahmeraum
- 7: Führungsbahn
- 8: Führungsbahn
- 9: Rückwand (Aufnahmeraum)
- 10: Anschlag
- 11: Beleuchtung (LED)
- 12: Beleuchtung (LED)
- 13: Ausnehmung
- 14: Wassertankventil
- 15: Abstellbereich
- 16: Rückwand (Abstellbereich)
- 17: Seitenwand
- 18: Abstellfläche
- 19: Ablauföffnungen
- 20: Milchgefäß
- 21: Dampfdüse
- 22: Blende
- 23: Display
- 24: Tastatur
- 25: Abtropfschale
- 26: Boden (Aufnahmeraum)

## Patentansprüche

1. Einbaugerät (1) zur Herstellung von Aufgussgetränken, umfassend:
- eine Heizeinrichtung zur Erhitzung von Wasser und/oder zur Herstellung von Wasserdampf,
- eine Brüheinheit (2) zur Aufbereitung des Aufgussgetränkes mittels des erhitzten Wassers,
- eine Ausgabevorrichtung (3) mit mindestens einem Getränkeauslass (4) zur Abgabe des in dem Einbaugerät (1) mittels der Brüheinheit (2) hergestellten Aufgussgetränkes,
- eine das Einbaugerät (1) verschließende Tür (5),
**dadurch gekennzeichnet, dass**
hinter der geöffneten Tür (5) des Einbaugerätes (1), ein Aufnahmeraum (6) mit mindestens einer zum Einsetzen und zur Entnahme der Brüheinheit (2) ausgeführten Führungsbahn (7, 8) vorhanden ist, die die Brüheinheit zunächst in Richtung der Rückwand des Aufnahmeraumes führt, um sie anschließend umzulenken und seitlich in ihre Endlage zu verbringen.

2. Einbaugerät nach Anspruch 1,
**dadurch gekennzeichnet, dass**
die Führungsbahn (7, 8) als von der Tür (5) in den Aufnahmeraum (6) hinein ansteigende Rampe ausgeführt ist.

3. Einbaugerät nach einem der vorstehend ausgeführten Ansprüche,
**dadurch gekennzeichnet, dass**
der Aufnahmeraum (6) eine C- oder L-Form aufweist, sodass die Brüheinheit sich in ihrer Endposition hinter der Ausgabevorrichtung (3) befindet.

4. Einbaugerät nach einem der vorstehend ausgeführten Ansprüche,
**dadurch gekennzeichnet, dass**
die Führungsbahn (7, 8) an der Rückwand (9) des Aufnahmeraumes (6) einen haptisch wahrnehmbaren Anschlag (10) zur Markierung eines Richtungswechsels aufweist.

5. Einbaugerät nach Anspruch 4,
**dadurch gekennzeichnet, dass**
die Führungsbahn (7, 8) einen haptisch wahrnehmbaren Endanschlag als Markierung der erreichten Einbauposition der Brüheinheit (2) aufweist.

6. Einbaugerät nach einem der vorstehend ausgeführten Ansprüche,
**dadurch gekennzeichnet, dass**
der Aufnahmeraum (6) eine Beleuchtung (11,12) aufweist.

7. Einbaugerät nach Anspruch 6,
**dadurch gekennzeichnet, dass**
die Beleuchtung (11, 12) aus mindestens einer LED -Lampe besteht.

8. Einbaugerät nach einem der vorstehend ausgeführten Ansprüche,
**dadurch gekennzeichnet, dass**
in den Aufnahmeraum (6) bei eingesetzter Brüheinheit (2) zusätzlich ein Wassertank einsetzbar ist.

9. Einbaugerät nach einem der vorstehend ausgeführten Ansprüche,
**dadurch gekennzeichnet, dass**
die Führungsbahn (7, 8) mittig eine Ausnehmung (13) aufweist, in die der Wassertank passgenau einsetzbar ist.

10. Einbaugerät nach Anspruch 9,
**dadurch gekennzeichnet, dass**
die Ausnehmung (13) ein bei eingesetztem Wassertank mit diesem gekuppeltes Wassertankventil (14) aufweist.

## Claims

1. Built-in device (1) for producing infusion beverages, comprising:
- a heating means for heating water and/or for producing steam,
- a brewing unit (2) for preparing the infusion beverage using the heated water,
- a dispensing apparatus (3) comprising at least one beverage outlet (4) for dispensing the infusion beverage produced in the built-in device (1) by means of the brewing unit (2),
- a door (5) which closes the built-in device (1),
**characterised in that** a receiving chamber (6) comprising at least one guide track (7, 8) designed for inserting and removing the brewing unit (2) is provided behind the open door (5) of the built-in device (1), which track first guides the brewing unit towards the rear wall of the receiving chamber in order to then deflect said unit and move it laterally into its end position.

2. Built-in device according to claim 1, **characterised in that** the guide track (7, 8) is designed as a ramp which slopes from the door (5) into the receiving chamber (6).

3. Built-in device according to either of the preceding claims, **characterised in that** the receiving chamber (6) has a C or L shape, and therefore the brewing unit is behind the dispensing apparatus (3) in its end position.

4. Built-in device according to any of the preceding claims, **characterised in that** the guide track (7, 8) has, on the rear wall (9) of the receiving chamber (6), a haptically perceptible stop (10) for marking a change in direction.

5. Built-in device according to claim 4, **characterised in that** the guide track (7, 8) has a haptically perceptible end stop as a marker indicating that the brewing unit (2) has reached its installed position.

6. Built-in device according to any of the preceding claims, **characterised in that** the receiving chamber (6) has an illumination means (11, 12).

7. Built-in device according to claim 6, **characterised in that** the illumination means (11, 12) consists of at least one LED lamp.

8. Built-in device according to any of the preceding claims, **characterised in that** a water tank can also be inserted into the receiving chamber (6) when the brewing unit (2) is inserted.

9. Built-in device according to any of the preceding claims, **characterised in that** the guide track (7, 8) has a recess (13) in the centre thereof, into which recess the water tank can be inserted with a precise fit.

10. Built-in device according to claim 9, **characterised in that** the recess (13) has a water tank valve (14) coupled thereto when the water tank is inserted.

## Revendications

1. Appareil encastré (1) destiné à la production de boissons infusées, comprenant :
- un dispositif de chauffage destiné à chauffer de l'eau et/ou à produire de la vapeur d'eau,
- une unité d'échaudage (2) destinée à préparer la boisson infusée au moyen de l'eau chauffée,
- un système de distribution (3) comportant au moins une sortie de boisson (4) destinée à délivrer la boisson infusée produite dans l'appareil encastré (1) au moyen de l'unité d'échaudage (2),
- une porte (5) fermant l'appareil encastré (1),
**caractérisé**
**en ce que** derrière la porte (5) ouverte de l'appareil encastré (1) est présent un espace de réception (6) comportant au moins un rail de guidage (7, 8) destiné à insérer et à retirer l'unité d'échaudage (2), le rail de guidage guidant d'abord l'unité d'échaudage en direction de la paroi arrière de l'espace de réception pour ensuite la dévier et la déplacer latéralement dans son emplacement final.

2. Appareil encastré selon la revendication 1,
**caractérisé**
**en ce que** le rail de guidage (7, 8) est réalisé sous la forme d'une rampe montant depuis la porte (5) jusque dans l'espace de réception (6).

3. Appareil encastré selon l'une des revendications précédentes,
**caractérisé**
**en ce que** l'espace de réception (6) présente une forme en C ou en L, de sorte que l'unité d'échaudage se trouve dans sa position finale derrière le système de distribution (3).

4. Appareil encastré selon l'une des revendications précédentes,
**caractérisé**
**en ce que** le rail de guidage (7, 8) présente, sur la paroi arrière (9) de l'espace de réception (6), une butée (10) haptiquement perceptible destinée à marquer un changement de direction.

5. Appareil encastré selon la revendication 4,
**caractérisé**
**en ce que** le rail de guidage (7, 8) présente une butée de fin de course haptiquement perceptible en tant que marquage de la position encastrée atteinte de l'unité d'échaudage (2).

6. Appareil encastré selon l'une des revendications précédentes,
**caractérisé**
**en ce que** l'espace de réception (6) présente un éclairage (11, 12).

7. Appareil encastré selon la revendication 6,
**caractérisé**
**en ce que** l'éclairage (11, 12) est constitué d'au moins une lampe à diode électroluminescente.

8. Appareil encastré selon l'une des revendications précédentes,
**caractérisé**
**en ce qu'**un réservoir d'eau peut également être inséré dans l'espace de réception (6) lorsque l'unité d'échaudage (2) est insérée.

9. Appareil encastré selon l'une des revendications précédentes,
**caractérisé**
**en ce que** le rail de guidage (7, 8) présente un évidement (13) au centre dans lequel le réservoir d'eau peut être inséré de manière ajustée.

10. Appareil encastré selon la revendication 9,
**caractérisé**
**en ce que** l'évidement (13) présente une vanne de réservoir d'eau (14) accouplée au réservoir d'eau lorsque celui-ci est inséré.
